# EUROPEAN PATENT SPECIFICATION

(11) **EP 3 223 463 B1**
(45) Date of publication and mention of the grant of the patent: **11.11.2020**
(21) Application number: 16162344.2
(22) Date of filing: 24.03.2016
(51) Int. Cl.: H04L 12/28, H04L 12/46

(54) **SYSTEM AND METHOD FOR MANAGING AND CHARACTERIZING ACTIVE DEVICES**
SYSTEM UND VERFAHREN ZUR VERWALTUNG UND CHARAKTERISIERUNG AKTIVER VORRICHTUNGEN
SYSTÈME ET PROCÉDÉ POUR GÉRER ET CARACTÉRISER DES DISPOSITIFS ACTIFS

(43) Date of publication of application: 27.09.2017
(73) Proprietor: Maurer, Boris, 12161 Berlin (DE)
(72) Inventor: Maurer, Boris, 12161 Berlin (DE); Runge, Mathias, 13158 Berlin (DE); Garn, Sebastian, 10407 Berlin (DE)
(74) Representative: Gulde & Partner

(56) References cited:
- EP-A1- 2 787 685
- WO-A2-2012/087419
- JUHANI LATVAKOSKI ET AL: "Towards Horizontal Architecture for Autonomic M2M Service Networks", FUTURE INTERNET, vol. 6, no. 2, 6 May 2014 (2014-05-06), pages 261-301, XP055292296, DOI: 10.3390/fi6020261

## Description

### FIELD OF INVENTION

The present invention relates generally to a system and method for managing and characterizing an active device.

In connection with the present invention, an "active device" has to be understood as a real world technical device or technical service that is configured to actively operate in the real world, i.e. a device or service that is configured to cause or at least trigger a technical effect. In other words, an "active device" represents a technical device or technical service that is adapted to directly or indirectly interact with other technical devices or systems. Usually, an "active device" includes one or more hardware components. However, also "active devices" that are implemented as software based services are usable, which services are configured to control an operation of a technical unit connected to the respective service. An "active device" can have a number of different states. In general, an "active device" is configured to communicate with other technical devices via a suitable communication channel, in particular a wireless communication channel. Preferably, an "active device" can be externally addressed, e.g. by a suitable controller device, in order to read and/or change a state of the "active device". A controller device can e.g. be a personal computing device, such as a smartphone, a tablet, a personal computer (PC), or a computing system interacting with the system in which the active device is accessible. Examples of "active devices" are typical household appliances, such as a lamp, a thermostat, a camera, etc., which devices can be addressed via a suitable control device or service. An "active device" that implements a service is e.g. a music or video streaming service, a video conferencing service, a photo storage and imaging service, and the like.

Active devices as described above can form part of the so called "Internet of Things" (loT). More and more devices of the respective kind, devices of everyday life, are configured to be connected with other devices and/or services over suitable communication networks, e.g. over the internet, in order to form part of more complex arrangements or systems, e.g. a so called "smart home", in which a number of household appliances and services are connected. Similar arrangements in other application areas are referred to as "smart mobility", "smart health", "smart logistics", "smart factory", "smart city", "smart buildings", or "smart grids", or can be found in the context of "industry 4.0" or "connected manufacturing".

### BACKGROUND OF THE INVENTION

The integration of new active devices into such an arrangement or system, or in general, building a new system of connected active devices, is often complicated for a number of reasons. Different devices of different manufactures generally follow different standards as regards inter-device communication. Even if a device is configured to be connected to an existing system or device via a standardized communication protocol, such as Bluetooth, WiFi, etc., there is in general no standardized way to ensure communication between the system and the new device as regards the functionality of the device and the integration of the device into the system. This e.g. is because an API provided by the device, which allows reading and/or changing device states, is not known to the system, and/or requests sent by the system cannot be answered by the device because a respective device controller does not support a respective communication protocol that is used by the system.

It is therefore an object of the present invention to suggest a system and method that allow overcoming the above-mentioned drawbacks.

WO 2012/087419 A1 describes an operating center server for managing communication sessions between terminal devices such as mobile phones, VOIP phones, and computers for example. The OC server creates and maintains sessions for one or more terminal devices that allow communication between these disparate devices on disparate communication networks through the OC server.

In an article entitled "Towards Horizontal Architecture for Autonomic M2M Service Networks" by Juhani Latvakoski et al., in Future Internet 2014, Vol. 6, pp. 261-301, a set of architectural principles and key enablers for a horizontal architecture are specified. A selected set of key enablers called as autonomic M2M manager, M2M service capabilities, M2M messaging system, M2M gateways towards energy constrained M2M asset devices and creation of trust to enable end-to-end security for M2M applications have been developed.

### SUMMARY OF THE INVENTION

This object is solved by a system and method as claimed in the independent claims. Preferred embodiments and advantageous developments of the invention are described in the dependent claims.

In accordance with one aspect of the present invention there is provided a system for characterizing an active device, wherein the system comprises at least a device class. The device class includes a set of component attributes, wherein a component attribute indicates a purpose of an active device. The device class further includes a set of capability attributes, wherein a capability attribute indicates a functionality of an active device. Each component attribute is linked to at least one of the capability attributes. The set of component attributes and the set of capability attributes is composed so that any active device can be characterized by at least one of the component attributes and at least one of the capability attributes linked to that at least one component attribute, meaning that the active device has a purpose indicated by the at least one component attribute and a functionality indicated by the capability attribute linked to the component device. In other words, the set of component attributes and the set of capability attributes allow to build up a complete and consistent abstraction model that allows to characterize any active device as regards its basic purpose and functionality. Therefore, the system is open for integration of any kind of active device, independent of the active device type and the specific functionality of the active device.

According to an embodiment, the set of component attributes comprises at least one of the following component attributes: sensor, actor, storage, and program. These component attributes, which represent major component attributes (for an exact definition of this term see below), allow to abstract the entire component universe, i.e. any active device can be characterized as being an actor, a sensor, a storage or a program. However, other major component attributes can be chosen so as to abstract any possible active device purpose.

An actor is a component that is at least associated with a specific action. A sensor is configured to listens to a specific element of the physical environment and to translate its observation into a certain value. A storage is configured to create a potential. A program can be seen as a complex set including at least one of an actor, a sensor, and a storage, as well as rules indicating the operation or interaction of these entities.

According to an embodiment, the set of capability attributes comprises at least one of the following capability attributes: settable, measurable, writable, readable, and deletable. These capabilities, which represent major capability attributes (for an exact definition of this term see below), allow to abstract any possible function of an active device, i.e. any active device can be characterized as providing at least one of these basic functionalities. Again, the above set of major capability attributes is not the only possible one. Alternative sets of major capability attributes can be used to abstract the universe of all possible basic functionalities of an active device.

Capabilities can be seen as atomic, abstract concepts for describing functionalities of an active device. Any capability attribute can further be specified by a capability specifying attribute. According to an embodiment, a capability attribute includes at least one capability specifying attribute, in particular at least one of:
- a property attribute, including a value and a unit of measure;
- an action attribute, representing an action to be carried out in connection with an active device;
- an event type attribute, representing an event type that might occur in connection with an active device.

By including a capability specifying attribute, an abstract functionality represented by a capability attribute can be transferred to a specific context. A typical property is e.g. a certain value and a unit of measure, like a meter showing that 60 [kWh] have been used. A typical action is e.g. the action "turn on", which is for example assumed whenever the capability attribute "settable" is linked with a component attribute. A typical event type is e.g. the notification that a battery of a sensor is running low or that an active device has reached an unexpected or abnormal state. For each component attribute type, one or more major capability attributes can be predefined to be linked to the respective component attribute.

In order to allow a more specific and context dependent abstraction and characterization of active devices, according to a preferred embodiment, derived component attributes and derived capability attributes can be defined. On a first level, component attributes can be derived from major component attributes and capability attributes can be derived from major capability attributes. A major component attribute is a component attribute that is not derived from another component attribute. Later on, also derived component attributes and derived capability attributes of higher order can be defined, i.e. component attributes can be derived from already derived component attributes, and capability attributes can be derived from already derived capability attributes.

In other words, according to an embodiment, the set of component attributes comprises at least one derived component attribute that is directly or indirectly - via another derived component attribute - derived from a major component attribute. The derived component attribute specifies the basic or major purpose indicated by the major component attribute.

As an example, from the major component attribute "actor", the derived component attribute "switch" can be derived, and from the derived component attribute "switch", the further derived component attribute "light switch" can be derived.

Analogously, a major capability attribute is a capability attribute that is not derived from another capability attribute. According to an embodiment, the set of capability attributes comprises at least one derived capability attribute that is directly or indirectly - via another derived capability attribute - derived from a major capability attribute. The derived capability attribute specifies the basic or major functionality indicated by the major capability attribute.

As an example, the major capability attribute "settable" can give rise to the derived capability attribute "colorable". Still further, a capability attribute "colorable by three colors" can be derived from the capability attribute "colorable".

The formation of derived component attributes or derived capability attribute as described above can also be referred to by the term well-known inheritance.

Using this concept has multiple advantages. On the one hand, a very precise characterization of active devices is possible. On the other hand, the system that is originally based on the major component attributes and the major capability attributes can consistently be refined. Conflicting component attribute definitions or conflicting capability attribute definitions can be avoided, since any attribute newly added to the system is clearly derived from an already existing attribute. Still further, adding derived attributes in the above described manner allows easily searching the system for active devices that include a specific capability, e.g. any active device that is "movable". "Movable" in this case can be seen as a derived capability attribute based on the major capability attribute "settable". The derived capability attribute "movable" can be specified by respective capability specifying attributes that allow recognizing, e.g., a change of the position in 3D-space. Needless to say that the capability attribute "movable" can give rise to further derived capability attributes, such as "horizontally/vertically movable", "stepwise movable", etc.

According to a variant, a capability specifying attribute of a derived capability specifies a respective capability specifying attribute of the capability attribute from which the derived capability is derived. According to another variant, a capability specifying attribute of a derived capability complements the capability specifying attributes of the capability attribute from which the derived capability is derived. Both variants can be combined.

According to an embodiment, the system further comprises a unit class. The unit class, which acts as some sort of container, includes at least one device class. The unit class further includes device class related attributes, such as user attributes that define an access to the device class by certain users. User attributes can e.g. specify those users that are allowed to access the devices class. Further, a role (e.g. admin, standard user, information user) of a respective user can be specified, which role in turn defines the respective access rights of the user. Alternatively, device class related attributes, such as user attributes, can directly be associated with the device class, without using a unit class.

According to an embodiment, the unit class further includes a device class group. A device class group includes a plurality of device classes and allows to group devices classes, e.g. device classes corresponding to specific domain (household, kitchen, etc.).

In this case, the unit class can further include a rule attribute that defines interaction of the device classes within the device class group.

According to an embodiment, the unit class further includes a connector function. The connector function is configured to establish a connection between an active device and the device class that characterizes the active device. The connector function can establish a direct connection to the active device or a connection to a middle layer, such as an API, that provides functionality of the active device.

According to an embodiment, a device class can further comprise additional attributes. Examples of such attributes are a device class type that further specifies the device class with respect to whether the device class characterizes a hardware device or a service or a virtual device (to be described below). Further examples are an identifier, a name, a main type, a main component attribute, etc. The device class can further include an information data attribute, which e.g. specifies the type of connectivity (e.g. Bluetooth, WiFi, NFC, etc.) of the active device to be characterized. Further aspects to be described in the information data attribute may refer to a specific technology of the active device, technological boundaries of the active device, or active device specific security aspects, such as e.g. a security class with respect to a standard security class convention.

According to an embodiment, also a component attribute can include additional attributes, such as a type, a name, an identifier, etc.

A component attribute can comprise component specifying attributes, comparable to the capability specifying attributes, that are not included in the capability attribute that is linked to the component attribute but is directly associated to the component attribute.

According to an embodiment, the system further comprises a software framework implementing at least the device class. Optionally, the unit class and the device class group can be implemented by the software framework.

According to an embodiment, the system further includes a software application based on the software framework. The software application is configured, when executed on a computing device, to allow the following:
- generation and addition of a device object, based on the device class defined by the software framework, to a device management system in a computing network, wherein the device object is designed to characterize a specific active device;
- connecting an active device to the device object; and
- communicating with the active device via the device management system over the computing network by means of a controller device.

According to an embodiment, the system comprises a computing device running the software application.

According to an embodiment, the system further comprises at least one active device that is configured to be connected to a device object added to the device management system.

According to an embodiment, the system further comprises a controller device, e.g. a smartphone or the like, that is adapted to communicate with the active device via the device management system over a computing network.

In accordance with another aspect of the present invention there is provided a method for characterizing an active device. The method comprises the following steps:
A set of component attributes is defined, wherein a component attribute indicates a purpose of an active device. In a further step, a set of capability attributes is defined, wherein a capability attribute indicates a functionality of an active device. Each component attribute is linked to at least one of the capability attributes so that any active device can be characterized by at least one of the component attributes and at least one of the capability attributes linked to that at least one component attribute, meaning that the active device has a purpose indicated by the at least one component attribute and a functionality indicated by the capability attribute linked to the component device.

A further step is analyzing an active device with respect to its purpose and its functionality. Based on this analysis, a device object is generated that characterizes the active device, wherein the device object, as an instance of the above described device class, includes at least one component attribute that indicates the purpose of the active device and at least one capability attribute that is linked to the at least one component attribute and indicates the functionality of the active device.

In other words, according to this method any active device can be characterized using the concepts underlying the above described inventive system.

According to an embodiment, the method comprises the step of defining a virtual device object. A virtual device object integrates the component attributes or the capability attributes or the component attributes and the capability attributes of a plurality of device objects. By means of a virtual device object a plurality of already existing device objects can in some sense be merged in order to define combined functionalities. The resulting virtual device object characterizes a set of functionalities that - in the real world - are only provided separately by separate devices and/or services. By defining a virtual device object, a real world object can be modelled that provides the functionalities of a number of separate active devices without the necessity of physically coupling the respective active devices. Examples include: A smart plug that is used to switch a lamp. The combination of the smart plug and the lamp may form a virtual device called "switchable lamp". A camera positioned at a front door, accompanied with a microphone and a loudspeaker, a smart door lock, a notification rule, a TV and a smartphone screen receiving notifications and capable of displaying the stream from the camera and the microphone, and connecting to the loudspeaker may be bundled so as to form a virtual device called "InterKom". A TV, a sound system and connected lamps in a living room can be used to form a virtual device called "Multimedia Home Cinema".

According to an embodiment, the method further comprises the steps of:
- generating a device management system based on a software framework that implements a device class, the device object being an object of the device class, and
- adding the device object to the device management system.

In other words, according to this embodiment, a system as described above is generated and a device object instantiated from the device class defined by the system is added to the system.

In a further step, the active device that is characterized by the device object can be connected to the device object and a communication between a controller device and the active device can be carried out via the device management system over a computing network.

As already mentioned above, in a further method step, component attributes and/or capability attributes of the device objects that have been added to the device management system can be stored in the system in a searchable manner, e.g. in a suitable database. This allows to easily search for active device objects already added to the device management system that match a predefined query component attribute or a predefined query capability attribute.

In sum, the present invention provides a number of advantages:
It is simple. There is no other abstraction model that could be a simpler representation of what an active device can do.

It is intuitive. The way active devices are presented to external services or applications is the most common and intuitive way. By optionally providing device class names, component names, etc. in natural language, also a human user readily recognizes the purpose and the functionality of an active device characterized by a device class.

It is open and expandable. While there is only a very limited set of component attributes and capability attributes, any active device can be characterized therefrom. The inventive approach allows to extend the set of pre-defined component attributes and capability attributes, namely by defining derived component attributes and derived capability attributes. The only requirement is derivability in the sense that a newly added component attribute or capability attribute can be constructed from an existing component attribute or capability attribute by combination, functional extension or functional specification.

It is universal and true. Since the above described system is a completely consistent framework derived from first elements, namely major component attributes and major capability attributes, it is always guaranteed that the content of information stored therein is understood in the same way by all elements connected to the system. In addition, any active device can be characterized.

It is pragmatic and useful. The suggested abstraction only pre-defines requirements to an extent that is absolutely necessary. The system is usable immediately and can be extended and adapted as it is being used in a very easy way. And it lends itself immediately to be integrated into a bigger ecosystem of relationships between active devices, including the definition of rules, relationships and scenes, assigning users and roles, units and groups in which active devices exist or can be used.

The characteristics, features and advantages of this invention and the manner in which they are obtained as described above, will become more apparent and be more clearly understood in connection with the following description of exemplary embodiments, which are explained with reference to the accompanying drawings.

### BRIEF DESCRIPTION OF THE DRAWINGS

In the drawings, same element numbers indicate same elements in each of the views:
Figure 1 is an exemplary setup in which an embodiment of the inventive system is used;
Figure 2 schematically illustrates a preferred embodiment of a device class;
Figure 3 schematically illustrates a preferred embodiment of a unit class;
Figure 4 schematically illustrates the formation of a virtual device; and
Figure 5 schematically illustrates steps of a preferred embodiment of an inventive method.

### DESCRIPTION OF THE PREFERRED EMBODIMENTS

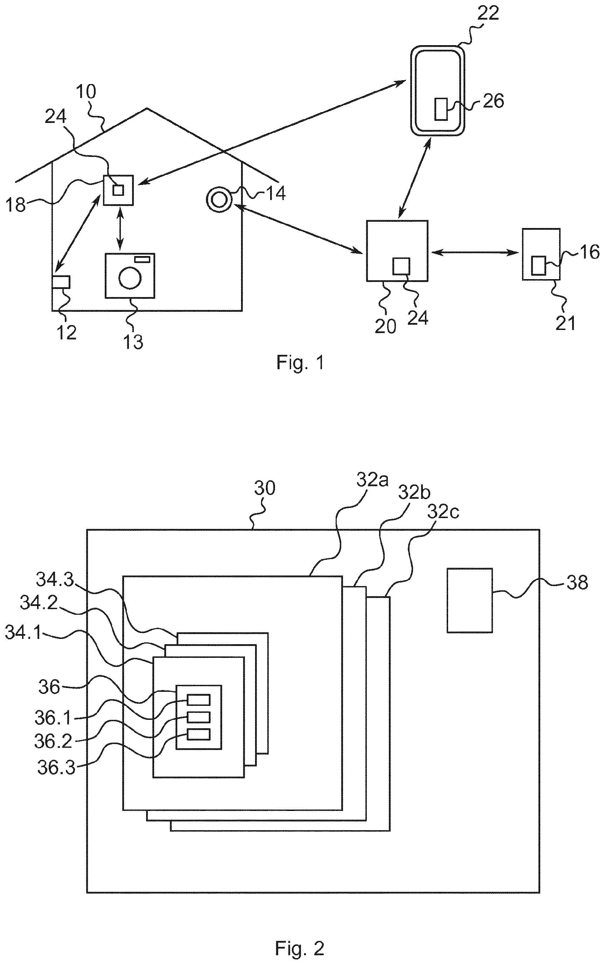

Figure 1 shows an exemplary setup in which an embodiment of the inventive system is used. In the following, the basic concept of the invention is described with respect to active devices in a household domain, i.e. with respect to a so called "smart home". However, the invention is not restricted to such a domain.

In a user's home 10, a plurality of active devices 12, 13, 14 can be provided, such as a wall plug 12, which is configured to be switched on and off. The wall plug 12 is further configured to measure power consumption of an appliance connected to the wall plug 12 and to indicate respective energy consumption by means of an LED-ring illuminating in different colors. Further active devices are a washing machine 13 and a smart meter 14. A further active device 16 in the form of a web service 16 is provided on an external server 21.

The smart devices 12, 13, 14, 16 are configured to be accessed to wirelessly. The wall plug 12 and the washing machine 13 are wirelessly connected to a router 18 in the user's home 10, which router 18 in turn can be access via the internet. The smart meter 14 is connected via the internet with a server 20 running a device management system 24. A respective device management system 24 is also running on the router 18. The server 21 hosting the web service 16 can also be connected to the server 20, thereby connecting the web service 16 to the device management system 24.

The device management system 24 provides the main abstraction layer that allows to characterize any active device 12, 13, 14, 16 in a uniform manner, so that an application 26 running on a controller device 22, such a smartphone, using a respective API, can communicate according to a uniform protocol with any one of the active devices 12, 13, 14, 16, in order to e.g. read, change, or delete a state of the respective active device 12, 13, 14, 16.

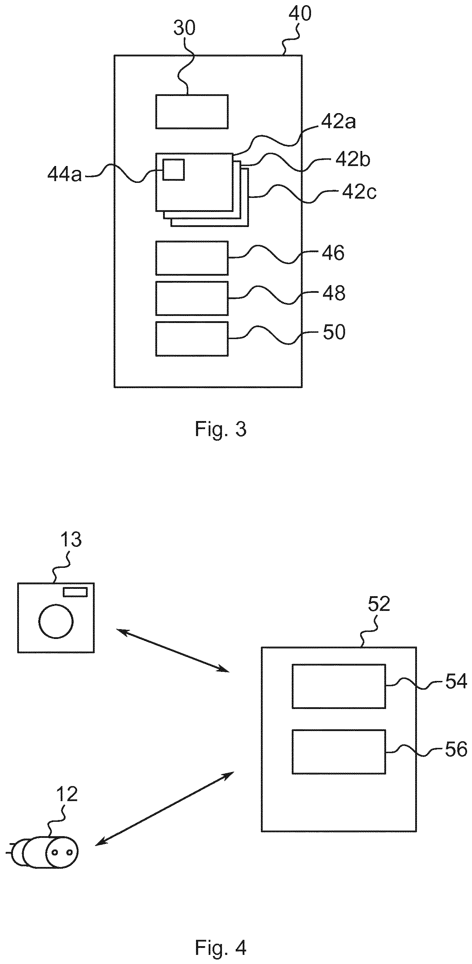

The device management system 24 runs a software application that is build and can be further developed and refined based on a software framework, the basic components of which are described below with respect to Fig. 2 and 3.

Figure 2 schematically illustrates a preferred embodiment of device class, such a device class representing the essential component of a system for characterizing active devices.

A device class 30 includes a set of component attributes 32a, 32b, 32c, wherein a component attribute 32 indicates a purpose of an active device. The device class 30 further includes a set of capability attributes 34.1, 34.2, 34.3, wherein a capability attribute 34 indicates a functionality of an active device. Each component attribute 32a is linked to at least one of the capability attributes 34.1, 34.2, 34.3, so that any active device 12 can be characterized by at least one of the component attributes 32a and at least one of the capability attributes 34.1, 34.2, 34.3 linked to that at least one component attribute 32a.

There are major component attributes 32a that are not derived from another component attribute and that indicate the basic purpose of an active device 12. Such major component attributes 32a are e.g. the following: sensor, actor, storage, and program. In addition, derived component attributes 32b can be provided, which are directly or indirectly derived from a major component attribute 32.

With respect to the major component attribute "actor", e.g. the following derived component attributes can be defined: reader, switch, dimmer, valve, accelerator, break, speaker, amplifier, player, screen, printer, processor, controller, mixer, fan, motor, generator, exchanger, steamer, dispatcher, collector, concentrator, tap, door lock, cooler, heater, lamp, etc.

With respect to the major component attribute "sensor", e.g. the following derived component attributes can be defined: microphone, camera, receiver, recorder, motion sensor, daylight-harvesting-sensor, etc.

With respect to the major component attribute "storage", e.g. the following derived component attributes can be defined: list, calendar, file, etc.

With respect to the major component attribute "program", e.g. the following derived component attributes can be defined: DRM, encryption handler, search engine, etc.

Analogously, there are major capability attributes 34.1 that are not derived from another capability attribute and that indicate a basic functionality of an active device 12. Major capability attributes are e.g. the following: settable, measurable, writable, readable, and deletable.

Again, derived capability attributes 34.2, 34.3 can be defined based on the major capability attributes 34.1.

With respect to the major capability attribute "settable", e.g. the following derived capability attributes can be defined: wipeable, switchable, heatable, coolable, expandable, colorable, acceleratable, changeable, lockable, etc.

In a similar manner, also for the other major capability attributes, a number of derived capability attributes can be defined.

A capability attribute 34.1 is further specified by a capability specifying attribute 36. Such a capability specifying attribute 36 can in particular include a property attribute 36.1, including a value and a unit of measure, or an action attribute 36.2, representing an action to be carried out in connection with an active device 12, or an event type attribute 36.3, representing an event type that might occur in connection with an active device 12.

As an optional attribute, an information data attribute 38 can be added to the device class 30, which e.g. specifies the type of connectivity (e.g. Bluetooth, WiFi, NFC, etc.) of the active device to be characterized.

The above described abstract definition of a device class 30 will now be explained with respect to a concrete example, namely an active device 12 in the form of the above mentioned wall plug 12. The wall plug 12 is a pluggable socket which a user can turn on and off remotely based on a wireless technology. In addition to common sockets, the wall plug 12 also has some extra features, as mentioned above, namely an LED ring as indicator for power consumption (color can be set due to configuration parameters) and a meter functionality configured to report the current power load.

Thus, the wall plug 12 has three purposes: a "socket", a "lamp", and a "sensor for power load". Every purpose corresponds to one component attribute. The "socket" and the "lamp" correspond to derived attributes based on the major component attribute "actor"; the "power load sensor" is a derived attributed based on the major component "sensor".

With respect to the turn "on/off" functionality of the "socket", a derived capability attribute "switchable" is defined, which is derived from the major capability attribute "settable". The capability attribute "switchable" is linked to the "socket" component attribute. The capability attribute "switchable" is further defined by a capability specifying attribute having a Boolean value (ON, OFF).

Due to the further component attribute "lamp", beside the capability attribute "switchable", another capability attribute "colorable" is be added to the respective device class and linked to the "lamp" component attribute.

In a similar manner, the meter functionality can be modelled in the respect device class.

Figure 3 schematically illustrates a preferred embodiment of a unit class.

A unit class 40 includes at least one device class 30. A unit class 40 can further include a number of user attributes 42a, 42b, 42c. A user attribute 42 is associated with a user of the system and indicates e.g. that a respective user has access to the device class 30 of the unit class 40. The specific access rights of the user can e.g. be inferred from the user role 44a (e.g. admin, standard user, information user).

A unit class 40 can include additional fields, such as a connector function 46. The connector function 46 is configured to establish a connection between an active device 12 and the device class 30 that characterizes the active device, i.e. the connector function 46 serves to connect the device class 30 with a real word active device 12 represented by the device class 30, e.g. as regards data communication between the active device 12 and a device objects in a running software application that is instantiated from the device class 30.

A device class group 48 can be used to group a number of devices classes 30, e.g. device classes of a common domain, wherein the interplay between these device classes can be governed by the rule attributes 50 of the unit class 40.

The above described architecture of the software framework allows to define so called virtual devices that are represented in a running system by virtual device objects. Figure 4 schematically illustrates the formation of a virtual device.

In general, a virtual device object is instantiated from a common device class. The respective device class, however, is newly formed by integrating component attributes of existing device classes that in turn characterize separate active devices. Fig. 4 illustrates a simple example.

The active device 13, the washing machine, does not include a sensor for power consumption; however, the wall plug 12 includes a respective functionality. In order to achieve an "intelligent washing machine" that is also configured to monitor and indicate power consumption, a virtual device 52 "intelligent washing machine" is defined by including the component attributes 54 originally associated with the "washing machine" device class and the component attributes 56 of the "wall plug" device class into a newly defined device class 52 representing an "intelligent washing machine". The resulting virtual device 52 can be seen as characterizing a washing machine with an integrated power consumption sensor.

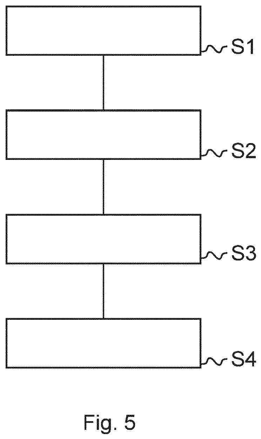

Figure 5 schematically illustrates steps of a preferred embodiment of an inventive method for characterizing an active device.

In step S1, a set of component attributes is defined, wherein a component attribute indicates a purpose of an active device, as described above in detail.

In step S2, a set of capability attributes is defined, wherein a capability attribute indicates a functionality of an active device, as also described above in detail. Each component attribute is linked to at least one of the capability attributes so that any active device can be characterized by at least one of the component attributes and at least one of the capability attributes linked to that at least one component attribute.

In step S3, an active device is analyzed with respect to its purpose and its functionality.

Based on this analysis, in step S4 a device object is generated that characterizes the active device. The device object includes at least one component attribute that indicates the purpose of the active device and at least one capability attribute that is linked to the at least one component attribute and indicates the functionality of the active device.

In order to facilitate steps S3 and S4, a device management system as described above can offer lists of component attributes and capability attributes that have already been added to the system. There can also be provided specific packages of component attributes and capability attributes with respect to certain domains or subdomains (e.g. household, kitchen). A kitchen package would includes basic component attributes and capability attributes that can often be found in connection with kitchen equipment.

Preferred embodiments of the present specification are listed in the following numbered items, which embodiments must not be confused with the appended claims:
1. A system for characterizing an active device, comprising a device class including
   - a set of component attributes, wherein a component attribute indicates a purpose of an active device,
   - a set of capability attributes, wherein a capability attribute indicates a functionality of an active device, wherein each component attribute is linked to at least one of the capability attributes so that any active device can be characterized by at least one of the component attributes and at least one of the capability attributes linked to that at least one component attribute.
2. The system according to item 1, wherein the set of component attributes comprises at least one of the following component attributes: sensor, actor, storage, and program.
3. The system according to item 1 or 2, wherein the set of capability attributes comprises at least one of the following capability attributes: settable, measurable, writable, readable, and deletable.
4. The system according to any one of items 1 to 3, wherein the set of component attributes comprises at least one derived component attribute that is derived from a major component attribute and that specifies the purpose indicated by the major component attribute.
5. The system according to any one of items 1 to 4, wherein the set of capability attributes comprises at least one derived capability attribute that is derived from a major capability attribute and that specifies the functionality indicated by the major capability attribute.
6. The system according to any one of the previous items, wherein a capability attribute includes at least one capability specifying attribute, in particular at least one of:
   - a property attribute, including a value and a unit of measure;
   - an action attribute, representing an action to be carried out in connection with an active device;
   - an event type attribute, representing an event type that might occur in connection with an active device.
7. The system according to items 5 and 6, wherein a capability specifying attribute of a derived capability specifies a respective capability specifying attribute of the capability attribute from which the derived capability is derived.
8. The system according to items 5 and 6 or according to item 7, wherein a capability specifying attribute of a derived capability complements the capability specifying attributes of the capability attribute from which the derived capability is derived.
9. The system according to any one of the previous items, further comprising a unit class, wherein the unit class includes at least one device class, and wherein the unit class further includes device class related user attributes that define an access to the device class by certain users.
10. The system according to any one of the previous items, further comprising a unit class, wherein the unit class includes at least one device class, and wherein the unit class further includes a device class group that includes a plurality of device classes.
11. The system according to item 10, wherein the unit class further includes a rule attribute that defines interaction of the device classes within the device class group.
12. The system according to any of items 9 to 11, wherein the unit class further includes a connector function that is configured to establish a connection between an active device and the device class that characterizes the active device.
13. The system according to any one of the previous items, further comprising:
   - a software framework implementing at least the device class.
14. The system according to item 13, further including:
   - a software application based on the software framework, wherein the software application, when executed on a computing device, is configured to allow:
   - generation and addition of a device object, based on the device class, to a device management system in a computing network;
   - connecting an active device to the device object;
   - communicating with the active device via the device management system over the computing network by means of a controller device.
15. The system according to item 14, further comprising:
   - a computing device running the software application.
16. The system according to item 15, further comprising:
   - at least one active device that is configured to be connected to a device object added to the device management system.
17. The system according to item 16, further comprising:
   - a controller device that is adapted to communicate with the active device via the device management system over a computing network.
18. A method for characterizing an active device, comprising the steps of:
   - defining a set of component attributes, wherein a component attribute indicates a purpose of an active device; and
   - defining a set of capability attributes, wherein a capability attribute indicates a functionality of an active device, wherein each component attribute is linked to at least one of the capability attributes so that any active device can be characterized by at least one of the component attributes and at least one of the capability attributes linked to that at least one component attribute,
   - analysing an active device with respect to its purpose and its functionality; and
   - generating a device object characterizing the active device, wherein the device object includes at least one component attribute that indicates the purpose of the active device and at least one capability attribute that is linked to the at least one component attribute and indicates the functionality of the active device.
19. The method of item 18, wherein the set of component attributes comprises at least one of the following component attributes: sensor, actor, storage, and program.
20. The method of item 18 or 19, wherein the set of capability attributes comprises at least one of the following capability attributes: settable, measurable, writable, readable, and deletable.
21. The method according to any one of items 18 to 20, further comprising the step of defining a derived component attribute that is derived from a major component attribute and that specifies the purpose indicated by the major component attribute.
22. The method according to any one of items 18 to 21, further comprising the step of defining a derived capability attribute that is derived from a major capability attribute and that specifies the functionality indicated by the major capability attribute.
23. The method according to any one of items 18 to 22, wherein a capability attribute includes at least one capability specifying attribute, in particular at least one of:
   - a property attribute, including a value and a unit of measure;
   - an action attribute, representing an action to be carried out in connection with an active device;
   - an event type attribute, representing an event type that might occur in connection with an active device.
24. The method according to item 22 and 23, wherein a capability specifying attribute of a derived capability specifies a respective capability specifying attribute of the capability attribute from which the derived capability is derived.
25. The method according to items 22 and 23 or according to item 24, wherein a capability specifying attribute of a derived capability complements the capability specifying attributes of the capability attribute from which the derived capability is derived.
26. The method according to any one of items 18 to 25, further comprising the step of defining a virtual device object that integrates
   - the component attributes or
   - the capability attributes or
   - the component attributes and the capability attributes
   of a plurality of device objects.
27. The method according to any one of items 18 to 26, further comprising the step of defining a device group object that includes a plurality of device objects.
28. The method according to item 27, further comprising the step of defining a rule attribute that defines interaction of the device objects within the device group object.
29. The method according to any one of items 18 to 28, further comprising the step of defining user attributes that define an access to the device object by certain users.
30. The method according to any one of items 18 to 29, further comprising the steps of:
   - generating a device management system based on a software framework that implements a device class, the device object being an object of the device class, and
   - adding the device object to the device management system.
31. The method of item 30, further comprising the steps of:
   - connecting the active device to the device object; and
   - communicating with the active device via the device management system over a computing network by means of a controller device.
32. The method according to any one of items 18 to 31, further including the step of storing
   - component attributes and/or
   - capability attributes
   of the device objects that have been added to the device management system in a searchable manner.
33. The method according to item 32, further including the step of
   - searching active devices objects added to the device management system that match a predefined query component attribute or a predefined query capability attribute.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### LIST OF REFERENCE SIGNS

- 10: user's home
- 12, 13, 14, 16: active device
- 18: router
- 20, 21: external server
- 22: controller device
- 24: device management system
- 26: application
- 30: device class
- 32a, 32b, 32c, 54, 56: component attribute
- 34.1, 34.2, 34.3: capability attribute
- 36, 36.1, 36.2, 36.3: capability specifying attribute
- 38: information data attribute
- 40: unit class
- 42a, 42b, 42c: user attribute
- 44a: user role
- 46: connector function
- 48: device class group
- 50: rule attribute
- 52: virtual device
- S1, S2, S3, S4: method steps

## Claims

1. A system for characterizing an active device (12), comprising a device class (30) including
- a set of component attributes (32a, 32b, 32c), wherein a component attribute (32a) indicates a purpose of an active device (12),
- a set of capability attributes (34.1, 34.2, 34.3), wherein a capability attribute (34.1) indicates a functionality of an active device (12),
wherein the set of component attributes and the set of capability attributes are selected to build up a complete and consistent abstraction model that allows to characterize any active device as regards its purpose and functionality, and
wherein each component attribute (32a) is linked to at least one of the capability attributes (34.1, 34.2, 34.3) so that any active device (12) can be **characterized by** at least one of the component attributes (32a) and at least one of the capability attributes (34.1, 34.2, 34.3) linked to that at least one component attribute (32a),
- a software framework implementing at least the device class (30); and
- a software application based on the software framework,
wherein the software application, when executed on a computing device (18; 20), is configured to allow:
- generation and addition of a device object, based on the device class (30), to a device management system (24) in a computing network;
- connecting an active device (12) to the device object; and
- communicating with the active device (12) via the device management system (24) over the computing network by means of a controller device (22).

2. The system according to claim 1, wherein the set of component attributes (32a, 32b, 32c) comprises at least one of the following component attributes: sensor, actor, storage, and program.

3. The system according to claim 1 or 2, wherein the set of capability attributes (34.1, 34.2, 34.3) comprises at least one of the following capability attributes: settable, measurable, writable, readable, and deletable.

4. The system according to any one of claims 1 to 3, wherein the set of component attributes (32a, 32b, 32c) comprises at least one derived component attribute that is derived from a major component attribute and that specifies the purpose indicated by the major component attribute.

5. The system according to any one of claims 1 to 4, wherein the set of capability attributes (34.1, 34.2, 34.3) comprises at least one derived capability attribute that is derived from a major capability attribute and that specifies the functionality indicated by the major capability attribute.

6. The system according to any one of the previous claims, wherein a capability attribute (34.1, 34.2, 34.3) includes at least one capability specifying attribute (36), in particular at least one of:
- a property attribute (36.1), including a value and a unit of measure;
- an action attribute (36.2), representing an action to be carried out in connection with an active device (12);
- an event type attribute (36.3), representing an event type that might occur in connection with an active device (12).

7. The system according to any one of the previous claims,
further including:
a computing device (18; 20) running the software application,
at least one active device (12; 13; 14; 16) that is configured to be connected to a device object added to the device management system (24), and
a controller device (22) that is adapted to communicate with the active device (12) via the device management system (24) over a computing network.

8. A method for characterizing an active device (12), comprising the steps of:
- defining a set of component attributes (32a, 32b, 32c), wherein a component attribute indicates a purpose of an active device (12); and
- defining a set of capability attributes (34.1, 34.2, 34.3), wherein a capability attribute (34.1) indicates a functionality of an active device (12),
wherein the set of component attributes and the set of capability attributes are selected to build up a complete and consistent abstraction model that allows to characterize any active device as regards its purpose and functionality, and
wherein each component attribute (32a) is linked to at least one of the capability attributes (34.1, 34.2, 34.3) so that any active device (12) can be **characterized by** at least one of the component attributes (32a) and at least one of the capability attributes (34.1, 34.2, 34.3) linked to that at least one component attribute (32a),
- analysing an active device (12) with respect to its purpose and its functionality; and
- generating a device object characterizing the active device (12), wherein the device object includes at least one component attribute (32a) that indicates the purpose of the active device (12) and at least one capability attribute (34.1, 34.2, 34.3) that is linked to the at least one component attribute (32a) and indicates the functionality of the active device (12), the method further comprising the steps of:
- generating a device management system (24) based on a software framework that implements a device class (30), the device object being an object of the device class (30), and
- adding the device object to the device management system (24).

9. The method of claim 8, wherein the set of component attributes (32a, 32b, 32c) comprises at least one of the following component attributes: sensor, actor, storage, and program, and
wherein the set of capability attributes (34.1, 34.2, 34.3) comprises at least one of the following capability attributes: settable, measurable, writable, readable, and deletable.

10. The method according to claim 9, further comprising the step of
- defining a derived component attribute that is derived from a major component attribute and that specifies the purpose indicated by the major component attribute, and/or the step of
- defining a derived capability attribute that is derived from a major capability attribute and that specifies the functionality indicated by the major capability attribute.

11. The method according to any one of claims 8 to 10, wherein a capability attribute (34.1) includes at least one capability specifying attribute (36), in particular at least one of:
- a property attribute (36.1), including a value and a unit of measure;
- an action attribute (36.2), representing an action to be carried out in connection with an active device (12);
- an event type attribute (36.3), representing an event type that might occur in connection with an active device (12).

12. The method according to any one of claims 8 to 11, further comprising the step of defining a virtual device object (52) that integrates
- the component attributes (54; 56) or
- the capability attributes or
- the component attributes and the capability attributes
of a plurality of device objects (12; 13).

13. The method according to any one of claims 8 to 12, further comprising the steps of:
- connecting the active device (12) to the device object; and
- communicating with the active device (12) via the device management system (24) over a computing network by means of a controller device (22).

14. The method according to any one of claims 8 to 13, further including the step of storing
- component attributes (32a, 32b, 32c) and/or
- capability attributes (34.1, 34.2, 34.3)
of the device objects that have been added to the device management system (24) in a searchable manner, preferably further comprising the steps of:
- searching active devices objects added to the device management system (24) that match a predefined query component attribute or a predefined query capability attribute.

## Patentansprüche

1. System zur Charakterisierung einer aktiven Vorrichtung (12), umfassend eine Vorrichtungsklasse (30), aufweisend
- einen Satz von Komponentenattributen (32a, 32b, 32c), wobei ein Komponentenattribut (32a) einen Zweck einer aktiven Vorrichtung (12) angibt,
- einen Satz von Fähigkeitsattributen (34.1, 34.2, 34.3), wobei ein Fähigkeitsattribut (34.1) eine Funktionalität einer aktiven Vorrichtung (12) angibt,
wobei der Satz von Komponentenattributen und der Satz von Fähigkeitsattributen ausgewählt werden, um ein vollständiges und konsistentes Abstraktionsmodell aufzubauen, das es ermöglicht, jede beliebige aktive Vorrichtung hinsichtlich ihres Zwecks und ihrer Funktionalität zu charakterisieren, und
wobei jedes Komponentenattribut (32a) mit mindestens einem der Fähigkeitsattribute (34.1, 34.2, 34.3) verknüpft ist, sodass jede beliebige aktive Vorrichtung (12) durch mindestens eines der Komponentenattribute (32a) und mindestens eines der Fähigkeitsattribute (34.1, 34.2, 34.3), das mit diesem mindestens einen Komponentenattribut (32a) verknüpft ist, charakterisiert werden kann,
- ein Software-Framework, das zumindest die Vorrichtungsklasse (30) implementiert; und
- eine Software-Anwendung, die auf dem Software-Framework basiert, wobei die Software-Anwendung, wenn sie auf einer Computervorrichtung (18; 20) ausgeführt wird, dazu ausgestaltet ist, Folgendes zu ermöglichen:
- Generieren und Hinzufügen eines Vorrichtungsobjekts, basierend auf der Vorrichtungsklasse (30), zu einem Vorrichtungsverwaltungssystem (24) in einem Computernetzwerk;
- Verbinden einer aktiven Vorrichtung (12) mit dem Vorrichtungsobjekt; und
- Kommunizieren mit der aktiven Vorrichtung (12) durch das Vorrichtungsverwaltungssystem (24) über das Computernetzwerk mittels einer Steuerungsvorrichtung (22).

2. System nach Anspruch 1, wobei der Satz von Komponentenattributen (32a, 32b, 32c) mindestens eines der folgenden Komponentenattribute umfasst: Sensor, Aktor, Speicher und Programm.

3. System nach Anspruch 1 oder 2, wobei der Satz von Fähigkeitsattributen (34.1, 34.2, 34.3) mindestens eines der folgenden Fähigkeitsattribute umfasst: einstellbar, messbar, beschreibbar, lesbar und löschbar.

4. System nach einem der Ansprüche 1 bis 3, wobei der Satz von Komponentenattributen (32a, 32b, 32c) mindestens ein abgeleitetes Komponentenattribut umfasst, das von einem Hauptkomponentenattribut abgeleitet ist und das den Zweck spezifiziert, der von dem Hauptkomponentenattribut angegeben wird.

5. System nach einem der Ansprüche 1 bis 4, wobei der Satz von Fähigkeitsattributen (34.1, 34.2, 34.3) mindestens ein abgeleitetes Fähigkeitsattribut umfasst, das von einem Hauptfähigkeitsattribut abgeleitet ist und das die Funktionalität spezifiziert, die von dem Hauptfähigkeitsattribut angegeben wird.

6. System nach einem der vorangehenden Ansprüche, wobei ein Fähigkeitsattribut (34.1, 34.2, 34.3) mindestens ein Funktionsspezifizierungsattribut (36) aufweist, insbesondere mindestens eines der folgenden:
- ein Eigenschaftsattribut (36.1), das einen Wert und eine Messeinheit aufweist;
- ein Handlungsattribut (36.2), das eine Handlung darstellt, die in Verbindung mit einer aktiven Vorrichtung (12) auszuführen ist;
- ein Ereignistypattribut (36.3), das einen Ereignistyp darstellt, der in Verbindung mit einer aktiven Vorrichtung (12) eintreten könnte.

7. System nach einem der vorangehenden Ansprüche, ferner aufweisend:
eine Computervorrichtung (18; 20), welche die Software-Anwendung ausführt,
mindestens eine aktive Vorrichtung (12; 13; 14; 16), die dazu ausgestaltet ist, mit einem Vorrichtungsobjekt verbunden zu werden, das zu dem Vorrichtungsverwaltungssystem (24) hinzugefügt wurde, und
eine Steuerungsvorrichtung (22), die dazu ausgelegt ist, durch das Vorrichtungsverwaltungssystem (24) über ein Computernetzwerk mit der aktiven Vorrichtung (12) zu kommunizieren.

8. Verfahren zur Charakterisierung einer aktiven Vorrichtung (12), umfassend die folgenden Schritte:
- Definieren eines Satzes von Komponentenattributen (32a, 32b, 32c), wobei ein Komponentenattribut einen Zweck einer aktiven Vorrichtung (12) angibt; und
- Definieren eines Satzes von Fähigkeitsattributen (34.1, 34.2, 34.3), wobei ein Fähigkeitsattribut (34.1) eine Funktionalität einer aktiven Vorrichtung (12) angibt,
wobei der Satz von Komponentenattributen und der Satz von Fähigkeitsattributen ausgewählt werden, um ein vollständiges und konsistentes Abstraktionsmodell aufzubauen, das es ermöglicht, jede beliebige aktive Vorrichtung hinsichtlich ihres Zwecks und ihrer Funktionalität zu charakterisieren, und
wobei jedes Komponentenattribut (32a) mit mindestens einem der Fähigkeitsattribute (34.1, 34.2, 34.3) verknüpft ist, sodass jede beliebige aktive Vorrichtung (12) durch mindestens eines der Komponentenattribute (32a) und mindestens eines der Fähigkeitsattribute (34.1, 34.2, 34.3), das mit diesem mindestens einen Komponentenattribut (32a) verknüpft ist, charakterisiert werden kann,
- Analysieren einer aktiven Vorrichtung (12) in Bezug auf ihren Zweck und ihre Funktion; und
- Generieren eines Vorrichtungsobjekts, das die aktive Vorrichtung (12) charakterisiert, wobei das Vorrichtungsobjekt mindestens ein Komponentenattribut (32a), das den Zweck der aktiven Vorrichtung (12) angibt, und mindestens ein Fähigkeitsattribut (34.1, 34.2, 34.3) aufweist, das mit dem mindestens einen Komponentenattribut (32a) verknüpft ist und die Funktionalität der aktiven Vorrichtung (12) angibt, wobei das Verfahren ferner die folgenden Schritte umfasst:
- Generieren eines Vorrichtungsverwaltungssystems (24) basierend auf einem Software-Framework, das eine Vorrichtungsklasse (30) implementiert, wobei das Vorrichtungsobjekt ein Objekt der Vorrichtungsklasse (30) ist, und
- Hinzufügen des Vorrichtungsobjekts zu dem Vorrichtungsverwaltungssystem (24).

9. Verfahren nach Anspruch 8, wobei der Satz von Komponentenattributen (32a, 32b, 32c) mindestens eines der folgenden Komponentenattribute umfasst: Sensor, Aktor, Speicher und Programm, und
wobei der Satz von Fähigkeitsattributen (34.1, 34.2, 34.3) mindestens eines der folgenden Fähigkeitsattribute umfasst: einstellbar, messbar, beschreibbar, lesbar und löschbar.

10. Verfahren nach Anspruch 9, ferner umfassend den folgenden Schritt:
- Definieren eines abgeleiteten Komponentenattributs, das von einem Hauptkomponentenattribut abgeleitet ist und das den Zweck spezifiziert, der von dem Hauptkomponentenattribut angegeben wird, und/oder den folgenden Schritt:
- Definieren eines abgeleiteten Fähigkeitsattributs, das von einem Hauptfähigkeitsattribut abgeleitet ist und das die Funktionalität spezifiziert, die von dem Hauptfähigkeitsattribut angegeben wird.

11. Verfahren nach einem der Ansprüche 8 bis 10, wobei ein Fähigkeitsattribut (34.1) mindestens ein Funktionsspezifizierungsattribut (36) aufweist, insbesondere mindestens eines der Folgenden:
- ein Eigenschaftsattribut (36.1), das einen Wert und eine Messeinheit aufweist;
- ein Handlungsattribut (36.2), das eine Handlung darstellt, die in Verbindung mit einer aktiven Vorrichtung (12) auszuführen ist;
- ein Ereignistypattribut (36.3), das einen Ereignistyp darstellt, der in Verbindung mit einer aktiven Vorrichtung (12) eintreten könnte.

12. Verfahren nach einem der Ansprüche 8 bis 11, ferner umfassend den Schritt des Definierens eines virtuellen Vorrichtungsobjekts (52), das Folgendes integriert:
- die Komponentenattribute (54; 56) oder
- die Fähigkeitsattribute oder
die Komponentenattribute und die Fähigkeitsattribute einer Mehrzahl von Vorrichtungsobjekten (12; 13).

13. Verfahren nach einem der Ansprüche 8 bis 12, ferner umfassend die folgenden Schritte:
- Verbinden der aktiven Vorrichtung (12) mit dem Vorrichtungsobjekt; und
- Kommunizieren mit der aktiven Vorrichtung (12) durch das Vorrichtungsverwaltungssystem (24) über ein Computernetzwerk mittels einer Steuerungsvorrichtung (22).

14. Verfahren nach einem der Ansprüche 8 bis 13, ferner aufweisend den Schritt des Speicherns von
- Komponentenattributen (32a, 32b, 32c) und/oder
- Fähigkeitsattributen (34.1, 34.2, 34.3)
der Vorrichtungsobjekte, die dem Vorrichtungsverwaltungssystem (24) suchbar hinzugefügt wurden, vorzugsweise ferner umfassend den folgenden Schritt:
- Suchen nach aktiven Vorrichtungsobjekten, die dem Vorrichtungsverwaltungssystem (24) hinzugefügt wurden, die einem vordefinierten Abfragekomponentenattribut oder einem vordefinierten Abfragefähigkeitsattribut entsprechen.

## Revendications

1. Système de caractérisation d'un dispositif actif (12), comprenant une classe d'appareil (30) ayant
- un ensemble d'attributs de composant (32a, 32b, 32c), un attribut de composant (32a) indiquant un but d'un dispositif actif (12),
- un ensemble d'attributs de capacité (34.1, 34.2, 34.3), un attribut de capacité (34.1) indiquant une fonctionnalité d'un dispositif actif (12),
l'ensemble d'attributs de composant et l'ensemble d'attributs de capacité étant sélectionnés pour constituer un modèle d'abstraction complet et cohérent permettant de caractériser tout dispositif actif quant au but et à la fonctionnalité de celui-ci, et chaque attribut de composant (32a) étant relié à au moins un des attributs de capacité (34.1, 34.2, 34.3) de sorte que tout dispositif actif (12) peut être **caractérisé par** au moins un des attributs de composant (32a) et au moins un des attributs de capacité (34.1, 34.2, 34.3) relié audit au moins un attribut de composant (32a),
- un cadre logiciel implémentant au moins la classe d'appareil (30) ; et
- une application logicielle sur la base du cadre logiciel,
où, quand elle est exécutée sur un dispositif informatique (18 ; 20), l'application logicielle est prévue pour permettre :
- la génération et l'ajout d'un objet de dispositif sur la base de la classe d'appareil (30) à un système de gestion de dispositifs (24) dans un réseau informatique ;
- la connexion d'un dispositif actif (12) à l'objet de dispositif ; et
- la communication avec le dispositif actif (12) par l'intermédiaire du système de gestion de dispositifs (24) sur le réseau informatique au moyen d'un dispositif de contrôleur (22).

2. Système selon la revendication 1, l'ensemble d'attributs de composant (32a, 32b, 32c) comprenant au moins un des attributs de composant suivants : capteur, actionneur, mémoire et programme.

3. Système selon la revendication 1 ou la revendication 2, l'ensemble d'attributs de capacité (34.1, 34.2, 34.3) comprenant au moins un des attributs de capacité suivants : réglable, mesurable, inscriptible, lisible et effaçable.

4. Système selon l'une des revendications 1 à 3, l'ensemble d'attributs de composant (32a, 32b, 32c) comprenant au moins un attribut de composant dérivé d'un attribut de composant principal et spécifiant le but indiqué par l'attribut de composant principal.

5. Système selon l'une des revendications 1 à 4, l'ensemble d'attributs de capacité (34.1, 34.2, 34.3) comprenant au moins un attribut de capacité dérivé d'un attribut de capacité principal et spécifiant la fonctionnalité indiquée par l'attribut de capacité principal.

6. Système selon l'une des revendications précédentes, un attribut de capacité (34.1, 34.2, 34.3) comprenant au moins un attribut de spécification de capacité (36), en particulier au moins un des attributs suivants :
- un attribut de caractéristique (36.1), comprenant une valeur et une unité de mesure ;
- un attribut d'action (36.2) représentant une action à exécuter en relation avec un dispositif actif (12) ;
- un attribut de type d'événement (36.3), représentant un type d'événement pouvant survenir en relation avec un dispositif actif (12).

7. Système selon l'une des revendications précédentes, comprenant en outre :
un dispositif informatique (18 ; 20) exécutant l'application logicielle,
au moins un dispositif actif (12 ; 13 ; 14 ; 16) prévu pour être connecté à un objet de dispositif ajouté au système de gestion de dispositifs (24), et
un dispositif de contrôleur (22) adapté pour communiquer avec le dispositif actif (12) par l'intermédiaire du système de gestion de dispositifs (24) sur un réseau informatique.

8. Procédé de caractérisation d'un dispositif actif (12), comprenant les étapes de :
- définition d'un ensemble d'attributs de composant (32a, 32b, 32c), un attribut de composant indiquant un but d'un dispositif actif (12) ; et
- définition d'un ensemble d'attributs de capacité (34.1, 34.2, 34.3), un attribut de capacité (34.1) indiquant une fonctionnalité d'un dispositif actif (12),
- l'ensemble d'attributs de composant et l'ensemble d'attributs de capacité étant sélectionnés pour constituer un modèle d'abstraction complet et cohérent permettant de caractériser tout dispositif actif quant au but et à la fonctionnalité de celui-ci, et chaque attribut de composant (32a) étant relié à au moins un des attributs de capacité (34.1, 34.2, 34.3) de sorte que tout dispositif actif (12) peut être **caractérisé par** au moins un des attributs de composant (32a) et au moins un des attributs de capacité (34.1, 34.2, 34.3) relié audit au moins un attribut de composant (32a),
- analyse d'un dispositif actif (12) quant à son but et à sa fonctionnalité ; et
- génération d'un objet de dispositif caractérisant le dispositif actif (12), ledit objet de dispositif comprenant au moins un attribut de composant (32a) indiquant le but du dispositif actif (12) et au moins un attribut de capacité (34.1, 34.2, 34.3) relié audit au moins un attribut de composant (32a) et indiquant la fonctionnalité du dispositif actif (12), ledit procédé comprenant en outre les étapes de :
- génération d'un système de gestion de dispositifs (24) sur la base d'un cadre logiciel implémentant une classe d'appareil (30), l'objet de dispositif étant un objet de la classe d'appareil (30), et
- ajout de l'objet de dispositif au système de gestion de dispositifs (24).

9. Procédé selon la revendication 8, où l'ensemble d'attributs de composant (32a, 32b, 32c) comprend au moins un des attributs de composant suivants : capteur, actionneur, mémoire et programme, et
l'ensemble d'attributs de capacité (34.1, 34.2, 34.3) comprenant au moins un des attributs de capacité suivants : réglable, mesurable, inscriptible, lisible et effaçable.

10. Procédé selon la revendication 9, comprenant en outre l'étape de
- définition d'un attribut de composant dérivé d'un attribut de composant principal et spécifiant le but indiqué par l'attribut de composant principal, et/ou l'étape de
- définition d'un attribut de capacité dérivé d'un attribut de capacité principal et spécifiant la fonctionnalité indiquée par l'attribut de capacité principal.

11. Procédé selon l'une des revendications 8 à 10, où un attribut de capacité (34.1) comprend au moins un attribut de spécification de capacité (36), en particulier au moins un des attributs suivants :
- un attribut de caractéristique (36.1), comprenant une valeur et une unité de mesure ;
- un attribut d'action (36.2), représentant une action à exécuter en relation avec un dispositif actif (12) ;
- un attribut de type d'événement (36.3), représentant un type d'événement pouvant survenir en relation avec un dispositif actif (12).

12. Procédé selon l'une des revendications 8 à 11, comprenant en outre l'étape de définition d'un objet de dispositif virtuel (52) intégrant
- les attributs de composant (54 ; 56) ou
- les attributs de capacité, ou les attributs de composant et les attributs de capacité d'une pluralité d'objets de dispositif (12 ; 13).

13. Procédé selon l'une des revendications 8 à 12, comprenant en outre les étapes de :
- connexion du dispositif actif (12) à l'objet de dispositif ; et de
- communication avec le dispositif actif (12) par l'intermédiaire du système de gestion de dispositifs (24) sur un réseau informatique au moyen d'un dispositif de contrôleur (22).

14. Procédé selon l'une des revendications 8 à 13, comprenant en outre l'étape de mémorisation
- d'attributs de composant (32a, 32b, 32c) et/ou
- d'attributs de capacité (34.1, 34.2, 34.3)
des objets de dispositif ayant été ajoutés au système de gestion de dispositifs (24) de manière à permettre une recherche, comprenant en outre préférentiellement les étapes de :
- recherche d'objets de dispositif actif ajoutés au système de gestion de dispositifs (24) correspondant à un attribut de composant d'interrogation défini ou à un attribut de capacité d'interrogation défini.
